# FASCICULE DE BREVET EUROPEEN

(11) **EP 0 595 693 B1**
(45) Date de publication et mention de la délivrance du brevet: **25.10.1995**
(21) Numéro de dépôt: 93402593.3
(22) Date de dépôt: 22.10.1993
(51) Int. Cl.: F16L 9/00, F16L 53/00, F01N 7/08, F01N 3/02, F01D 25/30

(54) **Gaine métallique soumise à des gradients de température élevés**
Umhüllung aus Metall unter Anwendung von höheren Temperaturgradienten
Metal jacket subjected to high temperature gradients

(30) Priorité: 26.10.1992 FR 9212723
(43) Date de publication de la demande: 04.05.1994
(73) Titulaire: EUROPEAN GAS TURBINES SA, F-75116 Paris (FR)
(72) Inventeur: Gandia, Liberto, F-70400 Blevilliers (FR); Rouget, Frederic, F-90300 Valdoie (FR)
(74) Mandataire: Fournier, Michel

(56) Documents cités:
- FR-A- 1 456 866
- GB-A- 2 089 434
- US-A- 2 634 759

## Description

La présente invention se rapporte à une gaine métallique soumise à des gradients de température élevés et en particulier à une gaine d'échappement de turbine à gaz.

Plus précisément, elle concerne une gaine métallique soumise intérieurement à des gradients de température élevés comportant une tôle de forme tubulaire de section rectangulaire à coins arrondis renforcée de raidisseurs extérieurs constitués de profilés disposés dans des plans perpendiculaires à l'axe de symétrie de la tôle et reliés à celle-ci.

De façon classique, la tôle est de section rectangulaire, de préférence carrée, avec des coins arrondis pour limiter les contraintes là où elles sont maximales. Les profilés raidisseurs, qui assurent la tenue mécanique, sont constitués de profilés soudés sur toute la périphérie de la tôle tubulaire. La gaine étant soumise à des gradients de température élevés, les profilés raidisseurs ont leur face soudée à la tôle qui s'échauffe très vite alors que leur partie extérieure est encore à température basse. Ces écarts de température de part et d'autre de l'âme d'inertie des profilés engendrent des contraintes thermiques liées aux dilatations différentielles qui en résultent. Dans les angles, où les valeurs des contraintes mécaniques classiques sont maximales, l'apport des contraintes thermiques différentielles provoque assez souvent des dépassements des performances des matériaux. Il en résulte des fissurations des profilés raidisseurs et plus gravement des déchirures de la tôle qui risquet d'entraîner des fuites du milieu très chaud véhiculé et une aggravation des dommages.

Une solution connue appliquée consiste à calorifuger extérieurement les profilés raidisseurs pour limiter le flux thermique à travers les sections de gaine et donc les différentiels thermiques mais les inerties des masses des gaines limitent grandement les performances de cette solution.

Une autre solution connue est de limiter la hauteur des profilés raidisseurs pour réduire l'écart de température entre leur base et leur sommet, ce qui impose de réduire le pas de raidissage pour conserver les caractéristiques mécaniques. Ceci n'est pas favorable économiquement et limite seulement le phénomène de fissuration des profilés raidisseurs sans cependant garantir la tenue d'étanchéité des gaines.

La présente invention se propose de résoudre ces problèmes par un agencement de profilés raidisseurs particulièrement simple.

Pour ce faire, selon l'invention, les profilés raidisseurs sont constitués de premiers profilés rectilignes soudés sur les côtés de la tôle et reliés au niveau de chaque coin par respectivement un second profilé solidaire par ses extrémités à deux premiers profilés situés sur deux faces adjacentes de la gaine, ce second profilé étant espacé de la tôle.

L'objet de l'invention est donc de dissocier le profilés raidisseurs de la tôle dans les coins de la gaine. Ainsi les deux faces du second profilé et en particulier la face tournée vers la tôle sont isolées par une lame d'air, ce qui limite beaucoup plus le flux thermique que tout isolant externe. L'écart maximal de température entre base et sommet est donc réduit considérablement.

Si les contraintes résiduelles sont encore trop importantes par rapport aux performances des matériaux, les fissurations des profilés raidisseurs des coins ne pourront se propager et atteindre la tôle. Celle-ci restera donc étanche ce qui évitera toute aggravation des dommages tels que destruction du calorifuge, raidisseurs à température trop élevée, rupture de raidisseurs, etc...

De préférence, chaque second profilé est soudé aux premiers profilés adjacents.

Avantageusement, chaque second profilé est de forme arrondie correspondante à la forme des coins de la tôle, le jeu entre second profilé et tôle étant sensiblement constant.

L'invention concerne également une gaine d'échappement de turbine à gaz constituée d'une gaine telle que précisée ci-dessus.

De telles gaines sont en général en acier réfractaire et sont soumises à des variations brutales de température du fait de mises en fonction rapides. L'étanchéité de la tôle isolée ou non des gaz y est primordiale.

L'invention est exposée ci-après plus en détail à l'aide de dessins ne représentant qu'un mode de réalisation préféré de l'invention.

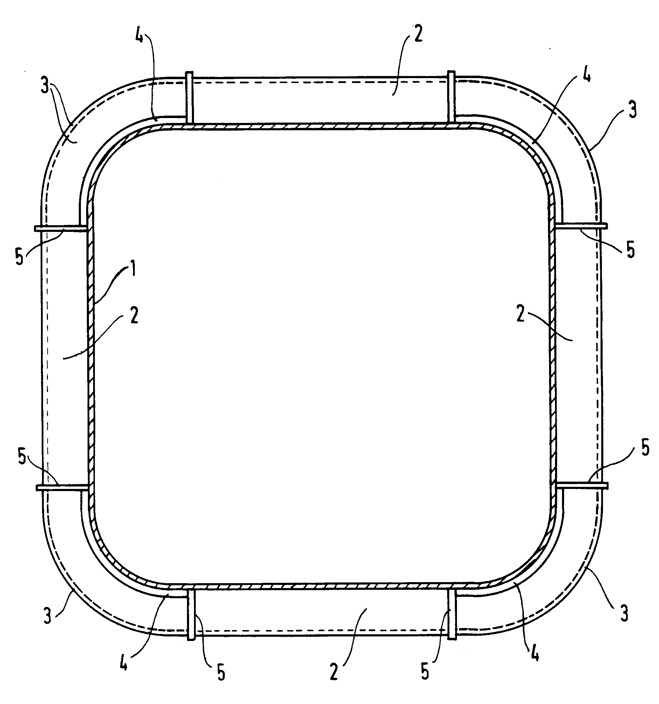

La figure unique est une vue en coupe transversale d'une gaine conforme à l'invention.

La gaine est constituée d'une tôle 1 tubulaire de section rectangulaire, de préférence carrée, à coins arrondis. Sur la périphérie de cette tôle à un pas déterminé par la tenue mécanique sont disposés des raidisseurs. Ces raidisseurs se composent de premiers profilés 2, de préférence en U, soudés sur les côtés de la tôle 1 et de seconds profilés 3, de préférence en U mais pouvant être par exemple en I, reliés par leurs extrémités à deux premiers profilés 2 adjacents. De préférence, ces second profilés 3 sont soudés à ces premiers profilés 2 par l'intermédiaire d'un plaque 5 soudée à l'extrémité des premiers profilés 2.

Les seconds profilés 3 sont espacés de la tôle 1 d'un jeu 4 sensiblement constant, leur forme étant arrondie en correspondance à la forme des coins de la tôle 1. Ce jeu 4 permet la création d'une lame d'air isolante et l'absence de contact entre la tôle 1 et les seconds profilés 3 évite toute transmission de fissure de ces profilés 3 soumis aux contraintes thermiques à la tôle 1.

## Revendications

1. Gaine métallique soumise intérieurement à des gradients de température élevés comportant une tôle (1) de forme tubulaire de section rectangulaire à coins arrondis renforcée de raidisseurs extérieurs constitués de profilés disposés dans des plans perpendiculaires à l'axe de symétrie de la tôle et reliés à celle-ci, gaine caractérisée en ce que les profilés raidisseurs sont constitués de premiers profilés (2) rectilignes soudés sur les côtés de la tôle (1) et reliés au niveau de chaque coin par respectivement un second profilé (3) solidaire par ses extrémités à deux premiers profilés (2) situés sur deux faces adjacentes de la gaine, ce second profilé (3) étant espacé de la tôle (1).

2. Gaine selon la revendication 1, caractérisé en ce que chaque second profilé (3) est soudé aux premiers profilés (2) adjacents.

3. Gaine selon la revendication 1 ou 2, caractérisé en ce que chaque second profilé (3) est de forme arrondie correspondante à la forme des coins de la tôle (1), le jeu (4) entre second profilé (3) et tôle (1) étant sensiblement constant.

4. Gaine d'échappement de turbine à gaz constituée d'une gaine selon la revendication 1, 2 ou 3.

## Claims

1. A metal duct, the inside of which is subjected to steep temperature gradients, and which comprises a sheet metal tube (1) of rectangular cross-section with rounded corners and reinforced with outer stiffeners constituted by members which are disposed in planes perpendicular to the axis of symmetry of the tube and which are connected thereto, said duct being characterized in that the stiffening members are constituted by rectilinear first members (2) welded to the sides of the tube (1) and interconnected at each corner via a respective second member (3) which is secured via its ends to two first members (2) situated on two adjacent faces of the duct, the second member (3) being spaced apart from the duct (1).

2. A duct according to claim 1, characterized in that each second member (3) is welded to the adjacent first members (2).

3. A duct according to claim 1 or 2, characterized in that each second member (3) has a rounded shape that matches the shape of each of the corners of the tube (1), the clearance (4) between the second member (3) and the tube (1) being substantially constant.

4. A gas turbine exhaust duct constituted by a duct according to claim 1, 2, or 3.

## Patentansprüche

1. Metallische Hülle, die innen hohen Temperaturgradienten ausgesetzt ist und ein rohrförmiges Blech (1) mit rechteckigem Querschnitt und abgerundeten Ecken enthält, das außen durch Versteifungsprofile verstärkt ist, die in Ebenen senkrecht zur Symmetrieachse der Hülle verlaufen und mit dieser verbunden sind, dadurch gekennzeichnet, daß die Versteifungsprofile aus ersten geradlinigen Profilen (2), die auf die Seiten des Blechs (1) aufgeschweißt sind, und aus zweiten Profilen (3) bestehen, die sich in Höhe jeder Ecke befinden und mit ihren Enden an zwei ersten Profilen befestigt sind, die auf den beiden benachbarten Seiten der Hülle liegen, und daß das zweite Profil (3) in einem Abstand vom Blech (1) verläuft.

2. Hülle nach Anspruch 1, dadurch gekennzeichnet, daß jedes zweite Profil (3) an die beiden benachbarten ersten Profile (2) angeschweißt ist.

3. Hülle nach Anspruch 1 oder 2, dadurch gekennzeichnet, daß jedes zweite Profil (3) eine abgerundete Form entsprechend der Form der Ecken des Blechs (1) besitzt, wobei der Abstand (4) zwischen dem zweiten Profil (3) und dem Blech (1) im wesentlichen konstant ist.

4. Gasaustrittsschacht für eine Gasturbine, bestehend aus einer Hülle gemäß Anspruch 1, 2 oder 3.
